# EUROPEAN PATENT APPLICATION

(11) **EP 2 915 664 A1**
(43) Date of publication of application: **09.09.2015**
(21) Application number: 13851061.5
(22) Date of filing: 29.10.2013
(51) Int. Cl.: B32B 25/08, C08J 7/00, C08K 3/06, C08K 5/098, C08L 33/04

(54) **RESIN-RUBBER COMPOSITE**

(30) Priority: 01.11.2012 JP 2012241846
(71) Applicant: NOK Corporation, Tokyo 105-8585 (JP)
(72) Inventor: SUZUKI Akihiro, Fujisawa-shi Kanagawa 251-0042 (JP); FUKASAWA Kiyofumi, Fujisawa-shi Kanagawa 251-0042 (JP)
(74) Representative: Beckmann, Claus
(86) International application number: PCT/JP2013/079277
(87) International publication number: WO 2014/069459

(57) **Abstract**

A resin-rubber composite in which a low pressure plasma-treated polyamide-based resin molded product and a higher fatty acid salt-sulfur vulcanizable acrylic rubber composition that forms an acrylic rubber layer are directly bonded by vulcanization without interposing an adhesive. The plasma treatment of a polyamide-based resin molded product is performed by a low pressure plasma treatment method. When the plasma treatment is performed by an atmospheric pressure plasma treatment method, desired adhesion between the resin and the rubber cannot be ensured. Here, an alkoxysilane compound in rubber composition is an optional component, and the presence or absence of this compound does not affect the adhesion.

## Description

### TECHNICAL FIELD

The present invention relates to a resin-rubber composite. More particularly, the present invention relates to a resin-rubber composite in which a polyamide-based resin molded product and acrylic rubber are directly bonded without interposing an adhesive.

### BACKGROUND ART

Combining polyamide-based resin molded products and acrylic rubber into composites is generally performed by a method using an adhesive. However, the adhesion method using an adhesive has problems not only in that the process is complicated, requiring complicated process management and causing high costs, but also in that it is necessary to use large amounts of environmentally hazardous substances, such as organic solvents.

Patent Document 1 discloses a resin-rubber laminate in which a polyamide resin that has been subjected to plasma treatment, corona discharge treatment, or ultraviolet irradiation treatment, and a rubber composition to which an alkoxysilane compound of the following formula is added: 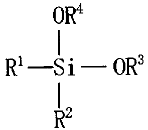 R¹, R²_{:} any functional groups
R³, R⁴: hydrocarbon groups
are laminated without interposing an adhesive and bonded. However, acrylic rubber is not exemplified as a rubber to which alkoxysilane compound is added.

Patent Document 2 discloses a method for combining a polyamide-based resin molded product and a member comprising other molding materials into a composite without using an adhesive, wherein at least one of these components is treated with an openair plasma on their contact surface prior to the production of the composite, and the other part is then integrally molded.

Here, vulcanized rubber compounds, such as a acrylic rubber compound, are mentioned as examples of the other molding materials; however, such compounds are molding members (e.g., injection molding member, extrudate, compression molding member), or semifinished products (e.g., single- or multilayer films, textile structures, etc.), and it is not described that the compounds are unvulcanized rubber compounds.

Moreover, Patent Document 3 discloses a fuel hose comprising a resin layer and an outer rubber layer laminated on the outer periphery of the resin layer, wherein after the resin layer made of a polyamide-based resin, or the like is formed by extrusion-molding, and before the outer rubber layer is extrusion-molded, the outer peripheral surface of the resin layer is subjected to microwave plasma treatment under reduced pressure. However, acrylic rubber is only exemplified as a rubber extrusion-molding the outer rubber layer.

### PRIOR ART DOCUMENTS

### PATENT DOCUMENTS

Patent Document 1 : JP-A-8-72203
Patent Document 2 : JP-A-2006-205732
Patent Document 3 : JP-A-2008-230244

### OUTLINE OF THE INVENTION

### PROBLEM TO BE SOLVED BY THE INVENTION

An object of the present invention is to provide a resin-rubber composite in which a polyamide-based resin molded product and acrylic rubber are effectively directly bonded without interposing an adhesive.

### MEANS FOR SOLVING THE PROBLEM

Such an object of the present invention is achieved by a resin-rubber composite in which a low pressure plasma-treated polyamide-based resin molded product and a higher fatty acid salt-sulfur vulcanizable acrylic rubber composition that forms an acrylic rubber layer are directly bonded by vulcanization without interposing an adhesive.

### EFFECT OF THE INVENTION

The resin-rubber composite of the present invention has the following features:
(1) The plasma treatment of a polyamide-based resin molded product is performed by a low pressure plasma treatment method. When the plasma treatment is performed by an atmospheric pressure plasma treatment method, desired adhesion between the resin and the rubber cannot be ensured.
(2) When polyphenylene sulfide, which is exemplified in Patent Document 3, is used in place of the polyamide-based resin, no adhesion between the resin and the acrylic rubber can be obtained.
(3) Higher fatty acid salt-sulfur vulcanizable acrylic rubber is used as the acrylic rubber to be vulcanization-bonded to the surface of a polyamide-based resin molded product. When acrylic rubber containing other crosslinkable group, such as triazine vulcanizable acrylic rubber, dithiocarbamic acid (salt) vulcanizable acrylic rubber, or organic ammonium vulcanizable acrylic rubber, is used, a certain level of adhesive strength is obtained in an adhesion test, described later; however, the rubber remaining ratio is 0% in any cases.
(4) An alkoxysilane compound, which is used as an essential component of Patent Document 1, is an optional component in the present invention, and the presence or absence of this compound does not affect the adhesion.

### EMBODIMENTS FOR CARRYING OUT THE INVENTION

Examples of the type of typical polyamides (PA) used as the polyamide-based resin to be treated with low pressure plasma, and their monomers are as follows:

| Type | Number of CH₂/NHCO groups | Starting material monomer |
|---|---|---|
| 46 | 4 | Tetramethylenediamine-adipate |
| 6 | 5 | ε-Caprolactam, ε-aminocaproic acid |
| 66 | 5 | Hexamethylenediamine-adipate |
| 610 | 7 | Hexamethylenediamine-sebacate |
| 612 | 8 | Hexamethylenediamine-dodecanoic diacid salt |
| 11 | 10 | ω-Aminoundecanoic acid |
| 12 | 11 | ω-Laurolactam, ω-aminododecanoic acid |

In addition to these polyamides, PA613, 3T, PA810, PA812, PA1010, PA1012, PA1212, PAPACM12, etc., can also be used. These polyamide-based resins are used singly or in combination. Further, they can be used in blending with other resins, such as polypropylene, within the range that does not impair the object.

Furthermore, molded products of these polyamide-based resins have a shape that allows vulcanization bonding and lamination of acrylic rubber to obtain composites. Examples of the shape include a plate shape, a rod shape, a hollow shape, etc., having a flat surface, a curved surface, an irregular surface, or the like. Specific applications thereof include hoses, anti-vibration rubber, and air springs, as well as elements of fuel guiding systems, cooling fluid guiding systems, oil guiding systems, and the like.

The outer surface of these polyamide-based resin molded products is treated with low pressure plasma. Low pressure plasma treatment is performed in a glass vacuum vessel equipped with two parallel plate electrodes in an inert gas atmosphere of an inert gas, such as He gas, Ne gas, Ar gas, Kr gas, Xe gas, or N₂ gas, preferably He gas, Ar gas, or N₂ gas, which are used singly or in a mixture, at a pressure of about 10 to 1,000 Pa, at an output of about 10 to 30,000 W for about 0.1 to 60 minutes, using a high frequency power source having a frequency of 40 kHz or 13.56 MHz, or a microwave power source having a frequency of 433 MHz to 2.45 GHz.

The higher fatty acid salt-sulfur vulcanizable acrylic rubber used herein is chlorine group-containing acrylic rubber, which is an acrylic rubber containing a chlorine group as a vulcanizable group.

Examples of the chlorine group-containing acrylic rubber include those obtained by copolymerizing at least one of an alkyl acrylate containing an alkyl group having 1 to 8 carbon atoms and an alkoxyalkyl acrylate containing an alkoxyalkyl group having 2 to 8 carbon atoms, with a chlorine group-containing unsaturated compound.

Examples of alkyl acrylates include methyl acrylate, ethyl acrylate, propyl acrylate, isopropyl acrylate, n-butyl acrylate, n-hexyl acrylate, 2-ethylhexyl acrylate, n-octyl acrylate, and their corresponding methacrylates. Alkyl groups having a longer chain length are generally advantageous in terms of cold resistance, but are disadvantageous in terms of oil resistance. Alkyl groups having a shorter chain length show an opposite tendency. In terms of the balance between oil resistance and cold resistance, ethyl acrylate and n-butyl acrylate are preferably used.

Moreover, examples of alkoxyalkyl acrylates include methoxymethyl acrylate, methoxyethyl acrylate, ethoxyethyl acrylate, n-butoxyethyl acrylate, ethoxypropyl acrylate, and the like; preferably 2-methoxyethyl acrylate and 2-ethoxyethyl acrylate. Although each of such alkoxyalkyl acrylates and alkyl acrylates may be used singly, it is preferable that the former is used at a ratio of 60 to 0 wt.%, and that the latter is used at a ratio of 40 to 100 wt.%. When an alkoxyalkyl acrylate is copolymerized, oil resistance and cold resistance are well balanced. However, when the copolymerization ratio of alkoxyalkyl acrylate is greater than this range, normal state physical properties and heat resistance tend to decrease.

In addition, examples of the chlorine group-containing acrylic rubber include those in which a chlorine group-containing unsaturated compound, such as chloroethyl vinyl ether, chloroethyl acrylate, vinylbenzyl chloride, vinyl chloroacetate, or allyl chloroacetate, is copolymerized at a copolymerization ratio of about 0.1 to 15 wt.%, preferably about 0.3 to 5 wt.%, in the chlorine group-containing acrylic rubber. Among these chlorine group-containing unsaturated compounds, when vinyl chloroacetate, or the like, is copolymerized, active chlorine group-containing acrylic rubber is formed.

In the chlorine group-containing acrylic elastomer, other copolymerizable ethylenic unsaturated monomers, such as styrene, α-methylstyrene, vinyltoluene, vinylnaphthalene, (meth)acrylonitrile, acrylic acid amide, vinyl acetate, cyclohexyl acrylate, benzyl acrylate, 2-hydroxyethyl acrylate, 4-hydroxybutyl acrylate, ethylene, propylene, piperylene, butadiene, isoprene, or pentadiene, can be further copolymerized at a ratio of about 50 wt.% or less.

Furthermore, in order to improve kneading processability, extrusion processability, and other properties, a polyfunctional (meth)acrylate or oligomer containing a glycol residue in the side chain can be further copolymerized, if necessary. Examples thereof include di(meth)acrylates of alkylene glycols, such as ethylene glycol, propylene glycol, 1,4-butanediol, 1,6-hexanediol, 1,9-nonanediol, and neopentyl glycol; di(meth)acrylates of polyalkylene glycols, such as tetraethylene glycol, tripropylene glycol, and polypropylene glycol; bisphenol A•ethylene oxide adduct diacrylate, dimethylol tricyclodecane diacrylate, glycerol methacrylate acrylate, 3-acryloyloxyglycerol monomethacrylate, and the like.

The chlorine group-containing acrylic elastomer is vulcanized by a higher fatty acid salt-sulfur based vulcanizing agent.

Examples of higher fatty acid metal salts include alkali metal salts or alkaline earth metal salts of fatty acids containing an alkyl group or alkenyl group having 8 to 18 carbon atoms, such as sodium stearate, potassium stearate, potassium myristate, sodium palmitate, calcium stearate, magnesium stearate, sodium oleate, potassium oleate, and barium oleate. These acids are used singly or in combination at a ratio of about 0.5 to 10 parts by weight, preferably about 1.5 to 8 parts by weight, based on 100 parts by weight of the active chlorine group-containing acrylic rubber.

Sulfur or a sulfur donor (e.g., high molecular weight sulfur), which serves as a sulfur-based vulcanizing agent, is used at a ratio of about 0.1 to 5 parts by weight, preferably about 0.3 to 3 parts by weight, based on 100 parts by weight of the chlorine group-containing acrylic rubber.

In addition to a higher fatty acid salt-sulfur based vulcanizing agent, a filler, such as carbon black, silica, graphite, clay, or talc, a plasticizer, a lubricant, a processing aid, etc., are suitably added to the chlorine group-containing acrylic rubber, thereby forming a composition. The composition may further contain alkoxysilane, such as one described in Patent Document 1 above, at a ratio of about 5 parts by weight or less, preferably about 0.05 to 1 part by weight, based on 100 parts by weight of the chlorine group-containing acrylic rubber.

Examples of alkoxysilane compounds include tetramethoxysilane, tetraethoxysilane, methyltriethoxysilane, vinyltrimethoxysilane, γ-chloropropyltrimethoxysilane, γ-mercaptopropyltrimethoxysilane, γ-methacryloxypropyltrimethoxysilane, γ-glycidoxypropyltrimethoxysilane, γ-aminopropyltriethoxysilane, γ-aminopropyltrimethoxysilane, γ-(2-aminoethyl)-aminopropyltrimethoxysilane, γ-(2-aminoethyl)-aminopropylmethyldimethoxysilane, γ-anilinopropyltrimethoxysilane, γ-ureidopropyltriethoxysilane, N-β-(N-vinylbenzylaminoethyl)-γ-aminopropyltrimethoxysilane, and the like. Above all, those containing an amino group as a functional group are preferably used.

A composition to which such an alkoxysilane compound is added or not added is prepared by kneading using a closed-type kneader, roll, or the like. The prepared composition is applied directly or as a solution, dispersion, etc., to the surface of a polyamide-based resin molded product, followed by vulcanization bonding under general vulcanization conditions of acrylic rubber.

### EXAMPLES

The following describes the present invention with reference to Examples.

### Example 1

A plate-like injection molded product (25 x 60 x 2 mm) made of polyamide (PA66; Amilan CM3001-G30, produced by Toray Industries, Inc.) was treated with low pressure plasma in a glass vacuum vessel equipped with aluminum parallel plates under the following conditions:
Atmosphere : helium gas
Pressure : about 60 Pa
Frequency: 40 kHz
Output: 200 W
Time : 10 minutes

A kneaded product of a higher fatty acid metal salt-sulfur vulcanizable acrylic rubber composition of the following Formulation Example was directly bonded, in an unvulcanized state, to one surface of the low pressure plasma-treated polyamide plate, followed by press vulcanization at 180°C for 8 minutes, thereby producing a resin-rubber composite:

### (Formulation Example I)

| | |
|---|---|
| Chlorine group-containing acrylic rubber | 100 parts by weight |
| (PA-402K, produced by Unimatec Co., Ltd.) | |
| HAF carbon black (produced by Cabot Japan K.K.) | 55 parts by weight |
| Stearic acid (produced by Miyoshi Oil & Fat Co., Ltd.) | 1 part by weight |
| Alkoxysilane | 0.5 parts by weight |
| (γ-aminopropyltriethoxysilane; produced by | |
| Dow Coming Toray Silicone Co., Ltd.) | |
| Antioxidant (Naugard 445, produced by CHEMTURA) | 2 parts by weight |
| Mold-releasing agent (Struktol, produced by Schill & Seilacher) | 2 parts by weight |
| Vulcanization accelerator (sodium stearate; NS Soap, produced by Kao Corporation) | 3 parts by weight |
| Vulcanization accelerator (potassium stearate; Nonsoul SK-1, produced by NOF Corporation) | 0.25 parts by weight |
| Sulfur | 0.3 parts by weight |

The obtained resin-rubber composite was measured for the adhesive strength and rubber-remaining area ratio by a 90-degree peel test according to JIS K6256 (2006) corresponding to ISO 813 as adhesiveness evaluation.

### Example 2

In Example 1, as a higher fatty acid salt-sulfur vulcanizable acrylic rubber composition, Formulation Example I that did not contain any silane compound was used.

### Examples 3 to 4

In Examples 1 to 2, a PA46 resin (Stanyl TW241F6, produced by DSM Corporation) was used as the low pressure plasma-treated polyamide.

### Comparative Example 1

In Example 2, a polyamide plate that was not treated with low pressure plasma was used.

### Comparative Example 2

In Example 2, a polyamide plate that was treated with, in place of the low pressure plasma, atmospheric pressure plasma under the following conditions was used:
Process gas : He
Distance between the test piece and the plasma nozzle : 15 mm
Treating speed : 100 mm/sec

### Comparative Example 3

In Example 2, a polyphenylene sulfide (Susteel PPS GS-30, produced by Tosoh Corporation) plate that was treated in the same way with low pressure plasma was used in place of the low pressure plasma-treated polyamide plate.

### Comparative Examples 4 to 7

In Examples 1 to 4, a triazine-vulcanizable acrylic rubber composition of the following Formulation Example was used in place of the higher fatty acid salt-sulfur vulcanizable acrylic rubber composition used in Example 1:

### (Formulation Example II)

| | |
|---|---|
| Chlorine group-containing acrylic rubber | 100 parts by weight |
| (A-1095, produced by Unimatec Co., Ltd.) | |
| HAF carbon black (produced by Cabot Japan K.K.) | 55 parts by weight |
| Stearic acid (produced by Miyoshi Oil & Fat Co., Ltd.) | 1 part by weight |
| Alkoxysilane | 0.5 parts by weight |
| (produced by Dow Coming Toray Silicone Co., Ltd. above-mentioned) | |
| Antioxidant (Naugard 445) | 2 parts by weight |
| Mold-releasing agent (Struktol WB212) | 2 parts by weight |
| Vulcanization accelerator (sodium stearate; NS Soap, produced by Kao Corporation) | 3 parts by weight |
| Triazine vulcanizing agent (2,4,6-trimercapto-s-triazine; Cheminox CL-T-2, produced by Unimatec Co., Ltd.) | 1 parts by weight |

### Comparative Examples 8 to 11

In Examples 1 to 4, a dithiocarbamic acid vulcanizable acrylic rubber composition of the following Formulation Example was used in place of the higher fatty acid salt-sulfur vulcanizable acrylic rubber composition used in Example 1:

### (Formulation Example III)

| | |
|---|---|
| Chlorine group-containing acrylic rubber (A-1095, produced by Unimatec Co., Ltd.) | 100 parts by weight |
| HAF carbon black (produced by Cabot Japan K.K.) | 55 parts by weight |
| Stearic acid (produced by Miyoshi Oil & Fat Co., Ltd.) | 1 part by weight |
| Alkoxysilane (produced by Dow Coming Toray Silicone Co., Ltd. above-mentioned) | 0.5 parts by weight |
| Antioxidant (Naugard 445) | 2 parts by weight |
| Mold-releasing agent (Struktol WB212) | 2 parts by weight |
| Dithiocarbamic acid vulcanizing agent (zinc dimethyldithiocarbamate ; Noccelar PZ, produced by Ouchi-Shinko Chemical Co.) | 2 parts by weight |
| Dithiocarbamic acid vulcanizing agent (ferric dimethyldithiocarbamate ; Noccelar TTFE, produced by Ouchi-Shinko Chemical Co.) | 0.5 parts by weight |

### Comparative Examples 12 to 15

In Examples 1 to 4, an organic ammonium vulcanizable acrylic rubber composition of the following Formulation Example was used in place of the higher fatty acid salt-sulfur vulcanizable acrylic rubber composition used in Example 1:

### (Formulation Example IV)

| | |
|---|---|
| Carboxyl group-containing acrylic rubber | 100 parts by weight |
| (AR-12, produced by Zeon Corporation) | |
| HAF carbon black (produced by Cabot Japan K.K.) | 55 parts by weight |
| Stearic acid (produced by Miyoshi Oil & Fat Co., Ltd.) | 1 part by weight |
| Alkoxysilane | 0.5 parts by weight |
| (produced by Dow Coming Toray Silicone Co., Ltd., above-mentioned) | |
| Antioxidant (Naugard 445) | 2 parts by weight |
| Mold-releasing agent (Struktol WB212) | 2 parts by weight |
| Vulcanization accelerator (NS Soap) | 4 parts by weight |
| Organic ammonium vulcanizing agent | 2 parts by weight |
| (Cheminox ACP5550, produced by Unimatec Co., Ltd.) | |

Following Table shows the results obtained in the above Examples and Comparative Examples, together with the kind of polyamide, kind of plasma treatment, kind of Formulation Example and the presence or absence of alkoxysilane.

**Table**

| | | | | | Measurement value | |
|---|---|---|---|---|---|---|
| Example | Polyamide | Plasma treatment | Formulation Example | Silane compound | Adhesive strength (N/mm) | Rubber-remaining ratio (%) |
| Ex. 1 | PA66 | Low pressure | I | Added | 4.6 | 100 |
| Ex. 2 | PA66 | Low pressure | I | None | 4.5 | 100 |
| Ex. 3 | PA46 | Low pressure | I | Added | 4.3 | 100 |
| Ex. 4 | PA46 | Low pressure | I | None | 4.3 | 100 |
| Comp. Ex. 1 | PA66 | None | I | None | 0.4 | 0 |
| Comp. Ex. 2 | PA66 | Atmospheric pressure | I | None | 1.8 | 5 |
| Comp. Ex. 3 | PPS | Low pressure | I | None | 0 | 0 |
| Comp. Ex. 4 | PA66 | Low pressure | II | Added | 1.5 | 0 |
| Comp. Ex. 5 | PA66 | Low pressure | II | None | 1.3 | 0 |
| Comp. Ex. 6 | PA46 | Low pressure | II | Added | 1.5 | 0 |
| Comp. Ex. 7 | PA46 | Low pressure | II | None | 1.4 | 0 |
| Comp. Ex. 8 | PA66 | Low pressure | III | Added | 1.8 | 0 |
| Comp. Ex. 9 | PA66 | Low pressure | III | None | 1.9 | 0 |
| Comp. Ex. 10 | PA46 | Low pressure | III | Added | 2.1 | 0 |
| Comp. Ex. 11 | PA46 | Low pressure | III | None | 1.9 | 0 |
| Comp. Ex. 12 | PA66 | Low pressure | IV | Added | 1.2 | 0 |
| Comp. Ex. 13 | PA66 | Low pressure | IV | None | 1.3 | 0 |
| Comp. Ex. 14 | PA46 | Low pressure | IV | Added | 1.3 | 0 |
| Comp. Ex. 15 | PA46 | Low pressure | IV | None | 1.2 | 0 |

## Claims

1. A resin-rubber composite in which a low pressure plasma-treated polyamide-based resin molded product and a higher fatty acid salt-sulfur vulcanizable acrylic rubber composition that forms an acrylic rubber layer are directly bonded by vulcanization without interposing an adhesive.

2. The resin-rubber composite according to claim 1, wherein the higher fatty acid salt-sulfur vulcanizable acrylic rubber is an acrylic rubber containing a chlorine group as a vulcanizable group.
